# EUROPEAN PATENT APPLICATION

(11) **EP 3 072 623 A1**
(43) Date of publication of application: **28.09.2016**
(21) Application number: 16160067.1
(22) Date of filing: 14.03.2016
(51) Int. Cl.: B23H 11/00

(54) **WORKPIECE FIXING JIG USED IN WIRE ELECTRIC DISCHARGE MACHINE**

(30) Priority: 23.03.2015 JP 2015059222
(71) Applicant: FANUC CORPORATION, Oshino-mura Minamitsuru-gun Yamanashi 401-0597 (JP)
(72) Inventor: NIU, Yan, Minamitsuru-gun, Yamanashi 401-0597 (JP); HASEGAWA, Yasuo, Minamitsuru-gun, Yamanashi 401-0597 (JP)
(74) Representative: Ward, James Norman

(57) **Abstract**

A jig (20) for fixing a workpiece (26) used in a wire electric discharge machine that machines the workpiece by moving a wire electrode and the workpiece relative to each other, has a table fixing portion (21) for fixing the jig on a table of the wire electric discharge machine and a workpiece fixing portion (22) which is provided with an opening (23) through which the wire electrode extends, wherein the workpiece is disposed on the opening so as to cover the opening, and fastened with a fastening member (27) in the opening direction of the opening.

## Description

### BACKGROUND OF THE INVENTION

### 1. Field of the Invention

The present invention relates to a wire electric discharge machine, and more particularly to a workpiece fixing jig used in a wire electric discharge machine.

### 2. Description of the Related Art

In a wire electric discharge machining, an electric discharge machining work is implemented while a wire electrode extends through a workpiece in a vertical direction and travels such that the wire electrode and the workpiece are moved relative to each other. When the workpiece is mounted on a table in a work tank of the wire electric discharge machine, the workpiece is mounted through a jig on the table.

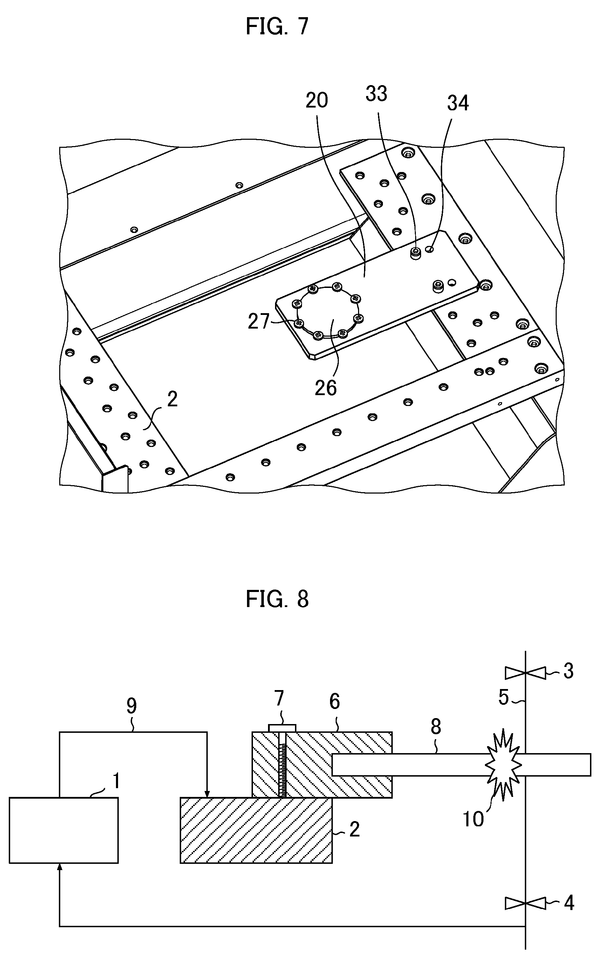

FIG. 8 is an explanatory diagram illustrating a prior art in which a workpiece 8 is mounted on a table 2 through a jig 6. The wire electric discharge machine has a working power source 1 and the table 2. The jig 6 is fixed on the table 2. The jig 6 is intended to fix the workpiece 8 and is fixed to the table 2 with a fixing screw 7. A wire electrode 5 is stretched between and supported by an upper guide 3 and a lower guide 4 and applies machining work to the workpiece 8 while traveling in a direction from the upper guide 3 toward the lower guide 4. The working power source 1 supplies a discharge current 9 to the space between the wire electrode 5 and the workpiece 8 via the table 2 by applying a voltage, using the workpiece 8 as one pole and the wire electrode 5 as the other pole and an electric discharge 10 is caused to conduct electric discharge machining work.

JP 11-151619 A discloses a holding plate including a first flat part for mounting a workpiece thereon and a second part having taps and posts prepared on a clamp device provided on the work table for positioning the first flat part accurately and repeatedly within the working area for the purpose of facilitating the positioning of the workpiece.

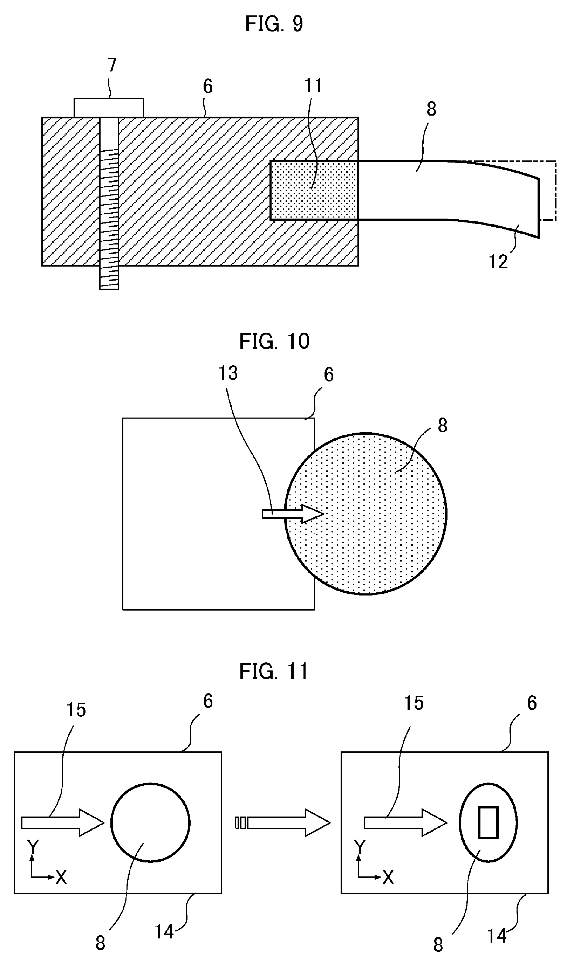

FIG. 9 is an explanatory diagram illustrating problem points in the method for mounting a workpiece shown in FIG. 8. The method for fixing the workpiece 8 shown in FIG. 8 may waste materials since the part held in the jig 6 cannot be machined as illustrated in FIG. 9 (not-machinable part 11). Further, the part that is not held in the jig 6 deforms by its own weight (deformed part 12 caused by its own weight) and may adversely influence the accuracy of the finished shapes.

FIG. 10 is an explanatory diagram illustrating the flow of the working current in the workpiece mounting method in FIGS. 8 and 9. The working current 13, which is important for the electric discharge machining work, flows through the workpiece 8 via its fixing portion fixed by the jig 6 and then flows toward the wire electrode 5 by means of an electric discharge. Conventional methods for fixing the workpiece 8 have the problem that it produces the difference of the electric current flowability between a portion near the fixing portion of the workpiece 8 and a portion on the side opposite to the fixing portion and thus the machining speed or the machining accuracy differs depending on the machined location.

JP 11-151619 A described above uses a method in which the workpiece 8 is inserted into an opening provided on the first part 14 and is fixed with a fastening screw extending perpendicularly to the direction Z (the opening direction of the opening). When the workpiece 8 is fixed with the fastening screw extending perpendicularly to the direction Z like this , the plane X-Y of the workpiece 8 is deformed by a tightening torque 15, which has an adverse influence on the machining accuracy (refer to FIG. 11).

### SUMMARY OF THE INVENTION

An object of the present invention is to provide a workpiece fixing jig used in a wire electric discharge machine and capable of reducing a waste of the workpiece at the jig holding part and reducing deformation of the workpiece when the workpiece is fixed on the jig, and is to provide a wire electric discharge machine using the workpiece fixing jig.

A jig for fixing a workpiece used in a wire electric discharge machine that machines the workpiece by moving a wire electrode and the workpiece relative to each other according to the present invention comprises a table fixing portion configured to fix the jig to a table of the wire electric discharge machine and a workpiece fixing portion having an opening through which the wire electrode extends and configured to fix the workpiece with a fastening member in an opening direction of the opening, the workpiece being disposed on the opening so as to cover the opening.

The jig may be provided with one or more work-start holes in a predetermined position on a periphery of the opening on the workpiece fixing portion.

A size of the opening of the jig is smaller than a size of an outer circumference of the workpiece.

The jig further comprises a holding member configured to press the workpiece from above against at least a part of a periphery of the opening and configured such that the fastening member fixes the workpiece to the workpiece fixing portion through the holding member.

A wire electric discharge machine uses one of the jigs described above.

The present invention can provide a workpiece fixing jig used in a wire electric discharge machine and capable of reducing a waste of the workpiece at the jig holding part and reducing deformation of the workpiece when the workpiece is fixed on the jig, and can provide a wire electric discharge machine using the workpiece fixing jig.

### BRIEF DESCRIPTION OF THE DRAWINGS

Objects and characteristics of the present invention described above and of others will be clarified by the following description of embodiments with reference to the following accompanying drawings.
FIG. 1 is a diagram showing a jig for fixing a circular workpiece according to an embodiment of the present invention;
FIG. 2 is a cross-sectional view showing a state in which a workpiece is fixed on a jig according to an embodiment of the present invention;
FIG. 3 is an explanatory view illustrating the flow of the working current in a workpiece mounting method according to the present invention;
FIG. 4 is a diagram showing a jig for fixing a rectangular workpiece according to an embodiment of the present invention;
FIG. 5 is a diagram showing a jig for fixing a workpiece having a complicated outer shape according to an embodiment of the present invention;
FIG. 6 is a perspective outer view of a jig illustrating further details of the jig shown in FIG. 1;
FIG. 7 is a diagram showing the state in which the jig shown in FIG. 6 is fixed on the table;
FIG. 8 is an explanatory diagram illustrating a prior art in which a workpiece is mounted on the table through a jig;
FIG. 9 is an explanatory view illustrating a problem of the workpiece mounting method according to FIG. 8;
FIG. 10 is an explanatory view illustrating the flow of the working current in the workpiece mounting method according to FIGS. 8 and 9; and
FIG. 11 is an explanatory view illustrating problems of a prior art.

### DETAILED DESCRIPTION OF THE PREFERRED EMBODIMENTS

Hereinafter, embodiments of the present invention will be described with reference to the drawings. The configuration of the wire electric discharge machine is the same as that in the prior art and thus will be described with reference to FIG. 8.

The jig according to the present invention is provided with an opening 23 for allowing the wire electrode 5 to extend through it in accordance with the outer shape of a workpiece 8 in order to apply machining work to the workpiece 8 without a waste, and the workpiece 8 is mounted so as to cover the opening 23 and then fixed with fastening screws extending in the direction Z. The present invention relates to a jig 20 that has the opening 23 provided in accordance with the outer shape of the workpiece 8 and that fixes the workpiece 8 at one or more positions with fastening screws or holding members. The opening 23 is provided on the workpiece fixing portion of the jig 20 in accordance with the shape of the workpiece 8. When the cross-sectional shape of the workpiece 8 is circular, the shape of the opening is also designed to be circular. When the shape of the workpiece 8 is rectangular, that of the opening is also designed to be rectangular. Further when the workpiece 8 has a complicated shape, the opening also has a complicated shape.

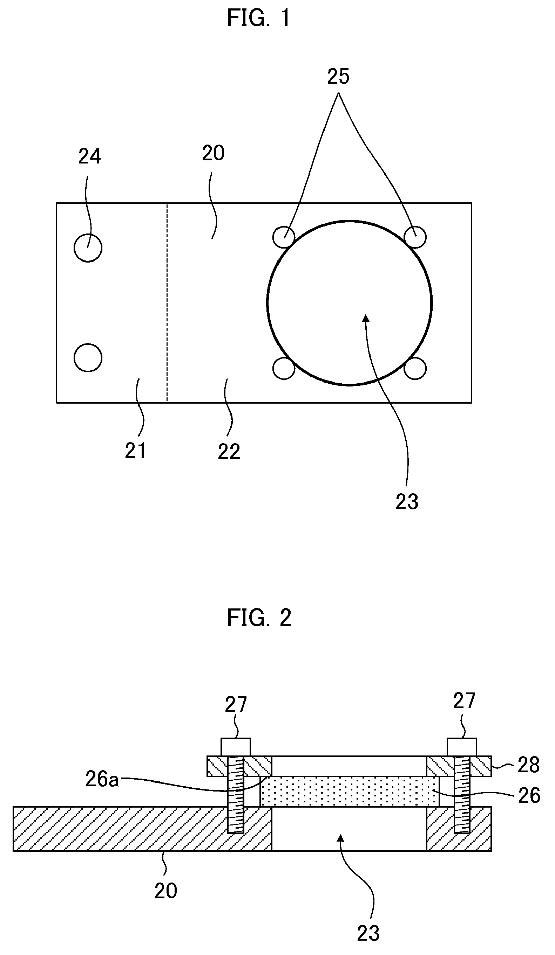

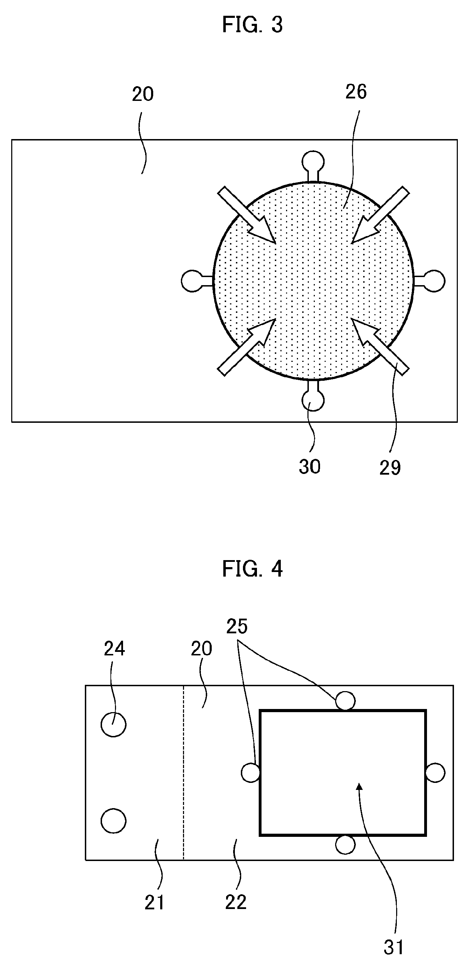

FIG. 1 is a diagram showing a jig for fixing a circular workpiece according to an embodiment of the present invention. FIG. 2 is a diagram showing the cross-sectional view of the state in which a workpiece 26 is fixed on the jig 20 according to an embodiment of the present invention. FIG. 3 is an explanatory diagram illustrating the flow of the working current in a workpiece mounting method according to the present invention.

The jig 20 is used for fixing the workpiece 26 used in the wire electric discharge machine that machines the workpiece 8 by moving the wire electrode 5 and the workpiece 26 relative to each other. The jig 20 has a table fixing portion 21 for fixing the jig 20 on the table 2 of the wire electric discharge machine, a circular opening 23 allowing the wire electrode 5 to extend through it, and a workpiece fixing portion 22 for fixing the circular workpiece 26 disposed on the circular opening 23 so as to cover the opening 23. Fixing tapped holes 24 are provided on the table fixing portion 21 as the need arises, and the body of the jig 20 is fixed on the table 2 of the wire electric discharge machine with fixing screws (not illustrated).

Fastening screw holes 25 are provided on the workpiece fixing portion 22. The circular workpiece 26 is fixed in the opening direction of the circular opening 23 on the workpiece fixing portion 22 with fastening screws (fastening members) 27 inserted in the fastening screw holes 25. The opening 23 as an open hole is provided on the workpiece fixing portion 22 in accordance with the outer shape of the circular workpiece 26 and the size of the opening 23 as an open hole is set to be smaller than that of the circular workpiece 26 such that the circular workpiece 26 can cover the circular opening 23 from above.

The jig 20 has a holding member 28 for holding the circular workpiece 26 along the periphery of the circular opening 23 from above. The fastening members (fastening screws 27), through the workpiece holding member 28, fix the circular workpiece 26 to the workpiece fixing portion 22. One or more screw holes are set in an appropriate position in response to the weight and the outer shape of the circular workpiece 26. The fastening screws 27 are mounted perpendicularly to the plane of the workpiece fixing portion 22 and fixes the circular workpiece 26 on the workpiece fixing portion 22 such that the circular workpiece 26 covers the circular opening 23 provided on the workpiece fixing portion 22. In some cases, not only the fastening screws 27 but also the workpiece holding member 28 with the fastening screws 27 presses the circular workpiece 26 against the jig 20. This member can distribute more uniformly the tightening torque added to the workpiece 26 and can fix a large workpiece more stably.

The above-described configuration of the jig 20 reduces the wasted part of the circular workpiece 26 at the location held by the jig 20 and reduces the deformation of the workpiece 26 caused because of its overhung configuration. The jig 20 which has an opening in accordance with the outer shape of the workpiece 26 and on which the workpiece 26 is fixed with several fastening screws 27 is provided, or as shown in FIG. 2, screw holes located outside the workpiece 26 for mounting of the fastening screws 27 in order to provide a ring-shaped covering over a workpiece circumference 26a are provided. The holding member 28 and the fastening screw 27 can press the workpiece 26 located between the workpiece holding member 28 and the jig 20 on the lower side. The workpiece holding member 28 only needs to press the workpiece 26 against at least a part of the periphery of the opening 23.

FIG. 3 is an explanatory diagram illustrating the flow of the working current in a workpiece mounting method according to the present invention. Since the jig 20 is provided with the opening 23 in accordance with the outer shape of the circular workpiece, the working current flows uniformly from the entire circumference of the workpiece. One or more work-start holes 30 are provided at a predetermined peripheral location of the opening 23 of the workpiece fixing portion 22. Providing the work-start holes 30 on the workpiece fixing portion 22 of the jig 20 eliminates labors to produce the work-start holes on the circular workpiece 26.

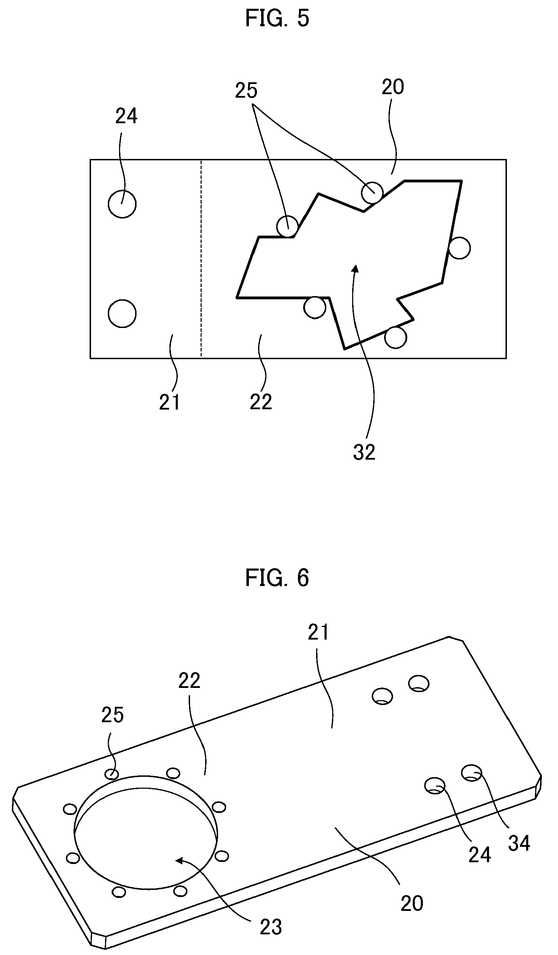

FIG. 4 is a diagram showing a jig for fixing a rectangular workpiece according to an embodiment of the present invention. This is an example in which the outer shape of the workpiece fixed on the jig 20 is rectangular. The jig 20 has a rectangular opening 31. FIG. 5 is a diagram showing a jig for fixing a workpiece having a complicated outer shape according to an embodiment of the present invention. The jig 20 has a polygonally-shaped opening 32.

FIG. 6 is a perspective diagram illustrating more detailed appearance of the jig shown in FIG. 1. FIG. 7 is a diagram showing the state in which the jig 20 shown in FIG. 6 is fixed on the table 2. The size of the opening 23 is set to be smaller than that of the circular workpiece 26 such that the circular workpiece 26 covers the opening from above. For example, when the circular workpiece 26 is 100 mm in diameter, the opening 23 is 90 mm or 95 mm in diameter, and the dimensions may be set as the need arises.

The fastening screw holes 25 for fastening the circular workpiece 26 on the upper surface of the workpiece fixing portion 22 are set along the periphery of the opening 23. When the circular workpiece 26 is 100 mm in diameter, the centers of fastening screw holes 25 are arranged in a circle whose diameter is 100 mm plus the diameter of each screw and which is concentric with the opening. The tapped holes for fixing screws (fixing tapped holes 24) and spare tapped holes 34 for screws are provided on the table fixing portion 21 such that the fixing position of the jig 20 is adjustable, and thus as the need arises, the fixing position of the jig 20 can be freely adjusted. Fixing screws 33 are mounted in the fixing tapped holes 24 to fix the jig 20 to the table 2.

When machining work is implemented by use of the jig 20 described above, a workpiece is placed on the opening of the fixing portion and each fastening screw is tightened such that the head of the fastening screw presses the workpiece. By use of this way, the jig 20 can be fixed without providing holes on the workpiece for fixing the workpiece. The holes for fixing the jig on the table are aligned with the jig fixing screw holes on the table respectively so as to fix the jig with screws, and then the workpiece can be machined. In the case of easily deformable materials or shapes of the workpiece under a stress, a holding member may be set between the workpiece and the fastening screw to distribute the tightening torque uniformly over the workpiece.

Depending on the type of the workpiece, the quality of the outer circumference of the workpiece is sometimes deteriorated because of the manufacturing process or the storage method, and therefore, machining is often implemented avoiding the circumference of the workpiece during the machining work. Hence, the fixing by use of the circumference of the workpiece, which cannot be included in a finished product due to its quality, offers a maximum usable area of the workpiece.

Providing an opening in accordance with the outer shape of the workpiece enables the wire electrode to implement the machining work while the wire electrode extends through the workpiece in a vertical direction. Further, the fastening screws provided perpendicularly to the workpiece fixing portion of the jig effectively reduces deformation caused by a tightening torque for fixing the workpiece. Still further, the setting of the holding member between the fastening screw and the workpiece can distribute more uniformly the tightening torque added to the workpiece and is effective for fixing a large workpiece more stably.

Since the entire outer circumference of the workpiece is in contact with the jig and the current flows uniformly from the entire outer circumference, the difference of current flowability depending on the machining portion on the workpiece can be lowered and work defects caused from the difference of the working speed can be reduced. Moreover, the supply of current from the entire outer circumference can increase the flow amount of the current compared with the current supply from a part of the circumference and brings an effect of enhancing the working speed.

Although hereinabove, embodiments according to the present invention is described, the present invention is not limited to the above examples of embodiments and can be implemented in other aspects with appropriate modifications added.

## Claims

1. A jig for fixing a workpiece used in a wire electric discharge machine that machines the workpiece by moving a wire electrode and the workpiece relative to each other, the jig comprising:
a table fixing portion configured to fix the jig to a table of the wire electric discharge machine; and
a workpiece fixing portion having an opening through which the wire electrode extends and configured to fix the workpiece with a fastening member in an opening direction of the opening, the workpiece being disposed on the opening so as to cover the opening.

2. The jig according to claim 1, wherein
one or more work-start holes are provided in a predetermined position on a periphery of the opening on the workpiece fixing portion.

3. The jig according to claim 1 or 2, wherein
a size of the opening is smaller than a size of an outer circumference of the workpiece.

4. The jig according to any one of claims 1 to 3, further comprising a holding member configured to press the workpiece from above against at least a part of a periphery of the opening and configured such that the fastening member fixes the workpiece to the workpiece fixing portion through the holding member.

5. A wire electric discharge machine using the jig according to any one of claims 1 to 4.
